# EUROPEAN PATENT APPLICATION

(11) **EP 3 343 066 A1**
(43) Date of publication of application: **04.07.2018**
(21) Application number: 18020002.4
(22) Date of filing: 02.01.2018
(51) Int. Cl.: F16G 5/16, B21D 28/00

(54) **METHOD FOR MANUFACTURING A TRANSVERSE SEGMENT FOR A DRIVE BELT FOR A CONTINUOUSLY VARIABLE TRANSMISSION**

(30) Priority: 30.12.2016 NL 1042210
(71) Applicant: Robert Bosch GmbH, 70442 Stuttgart (DE)
(72) Inventor: VAN DEN Heuvel, Robert, 5000AM Tilburg (NL)
(74) Representative: Plevier, Gabriel Anton Johan Maria

(57) **Abstract**

The present invention concerns a method for manufacturing a transverse segment (1) with a base portion (10) and a pillar portion (11) defining a protruding stud (6) and a pocket, which transverse segment (1) is destined to be part of a drive belt. According to the present invention and prior to cutting the transverse segment (1) out of basic material (50), a hole (53) is punched into the basic material (50) to the side of the pillar portion (11) at the location of the stud (6) and the pocket thereof. Thereafter, the transverse segment (1) is cut-out by means of a blanking punch with a part extending beyond the contour of the transverse segment (1) into such preformed hole (53).

## Description

This disclosure relates to a method for manufacturing a transverse segment that is destined to be part of a drive belt for a continuously variable transmission with two pulleys and the drive belt. Such a drive belt is commonly known and is mainly applied running around and between the two transmission pulleys, which pulleys each define a V-groove of variable width wherein a respective circumference part of the drive belt is held.

A known type of drive belt comprises an essentially contiguous row of transverse segments that are mounted on and around the circumference of an endless carrier. Each such transverse segment defines a slot that is open towards the radial outside of the drive belt and that accommodates and confines a respective circumference section of the endless carrier, while allowing the transverse segments to move along the circumference thereof. The endless carrier is formed by a number of flat and thin rings that are mutually stacked in the radial direction. This particular type of drive belt, also denoted in the art as pushbelt, is known from the international patent application WO2015/177372-A1, for example.

In the above and the below description, the axial, radial and circumference directions are defined relative to the drive belt when placed in a circular posture. Furthermore, a thickness dimension of the transverse segments is defined in the circumference direction of the drive belt, a height dimension of the transverse segment is defined in the said radial direction and a width dimension of the transverse segment is defined in the said axial direction.

The known transverse segment comprises a base portion and two pillar portions that extend from the base portion at either axial side thereof in radial outward direction. The said slot accommodating the endless carrier is defined by and between the base portion and the two pillar portions. The base portion defines a carrying surface that forms that extends between the pillar portions forming the bottom of the slot, for supporting the endless carrier in radial outward direction.

Both pillar portions are provided with alignment means in the form of a depression, i.e. pocket and a protuberance, i.e. stud that are provided on mutually opposite sides of a respective pillar portion and that predominantly protrude in the circumference direction. In the drive belt the studs of a first transverse segment are inserted in corresponding pockets of an adjacent transverse segment, whereby these segments are mutually aligned, at least to an extent determined by a clearance between the outer circumference of the studs relative to the inner circumference of the pockets.

Typically the transverse segments are manufactured, i.e. cut from a strip or plate of basic material in a known blanking process by means of a blanking device. The known blanking device comprises a die, a guide plate and a blanking punch, whereof the blanking punch is provided with an outline essentially corresponding to the outer contour of the transverse segment to be formed, while the die and guide plate are provided with internal cavities with a corresponding contour wherein the blanking punch is contained. In the known blanking process, the basic material is clamped by and between the guide plate and the die and the blanking punch is pressed through the basic material from the side of the guide plate to the side of the die, thus cutting the transverse segment out of the basic material. Typically also in the known blanking device and process, a counter punch or ejector is applied on the opposite side of the basic material relative to the blanking punch. This latter arrangement of the blanking device allows a front main body surface and/or a rear main body surface of the transverse segment to be shaped and calibrated during the blanking thereof, through the plastic deformation of the basic material by and between the end faces of the blanking punch and the ejector respectively.

Also the said alignment means of the pillar portions are formed by the blanking device. Hereto, the end face of the blanking punch is provided with protruding pins that press into the basic material for forming the pockets. The end face of the ejector is provided with correspondingly positioned depressions that receive at least some of the basic material displaced by the protruding pins of the blanking punch, thus forming the studs. The protruding pins of the blanking punch can be realised as an integral part thereof, or as a separate rod contained -in part- in a bore of the blanking punch.

In the blanking process, the blanking punch must of course be of sufficient strength to withstand the force that needs to be exerted thereby in the blanking process. Thus all parts of the blanking punch must be provided with minimum cross-section to cope with the blanking force. In particular the parts of the blanking punch provided with or containing the protruding pins are of concern in this respect. These must not be located (too) close to a circumference edge of the blanking punch to prevent that they break off or out of the blanking punch under influence of the blanking force. As a consequence, a limit applies to the minimum width of the pillar portions of the transverse segments, at least in relation to a width or diameter of the studs and pockets of the alignment means. However, a smaller width of the pillar portions (relative to the width of the studs and pockets of the alignment means) is preferable, as it allows a wider, i.e. favourably stronger endless carrier to be applied in the drive belt.

According to the present disclosure, the width of the pillar portions can be favourably reduced by cutting the transverse segment from the basic material in at least two steps:
- firstly, the pillar portions of the transverse segment are at least partly formed by punching at least one hole into the basic material to at least one side of at least one of the pillar portions at a location where this will be provided with the said alignment means later by means of a piercing punch; and
- thereafter, parts of or the complete contour of the transverse segment is blanked, i.e. is cut from the basic material, by means of a blanking punch that extends, at least in part, into the hole punched earlier, while simultaneously forming the alignment means in the pillar portions by protruding pins of such blanking punch.

Because, in accordance with the present disclosure, the blanking punch extends into the preformed hole in the basic material, it is wider than the respective pillar portion at least at the location of the protruding pin thereof that forms the pocket in that pillar portion in the of the transverse segments. Therefore, at such critical location, the blanking punch is favourably provided with additional strength.

Preferably in the first step, a hole is punched into the basic material at both sides of both pillar portions of the transverse segment where these will be provided with the said alignment means later. In this case four piercing punches are used and four holes are formed. Thereafter, the complete contour of the transverse segment from the basic material is cut, while forming the alignment means in the pillar portions by means of the blanking punch, this blanking punch can extend beyond the contour of the transverse segment at both sides of both pillar portions.

The above-described method for manufacturing the transverse segment will now be explained in more detail by way of example on the basis of the description below with reference to the drawing, in which:
- figure 1 is a simplified and schematic side elevation of a transmission with two pulleys and a drive belt;
- figure 2 illustrates the known drive belt with generally V-shaped transverse segments in a cross-section thereof facing in its circumference direction and also includes a separate side elevation of only the transverse segment thereof;
- figure 3 schematically shows a longitudinal cross-section of a blanking area of a blanking device with basic material being placed in there;
- figure 4 schematically illustrates the basic process of blanking the transverse segment with the blanking device of figure 3; and
- figures 5 and 6 schematically illustrate a novel method of manufacturing the transverse segment in two subsequent steps.

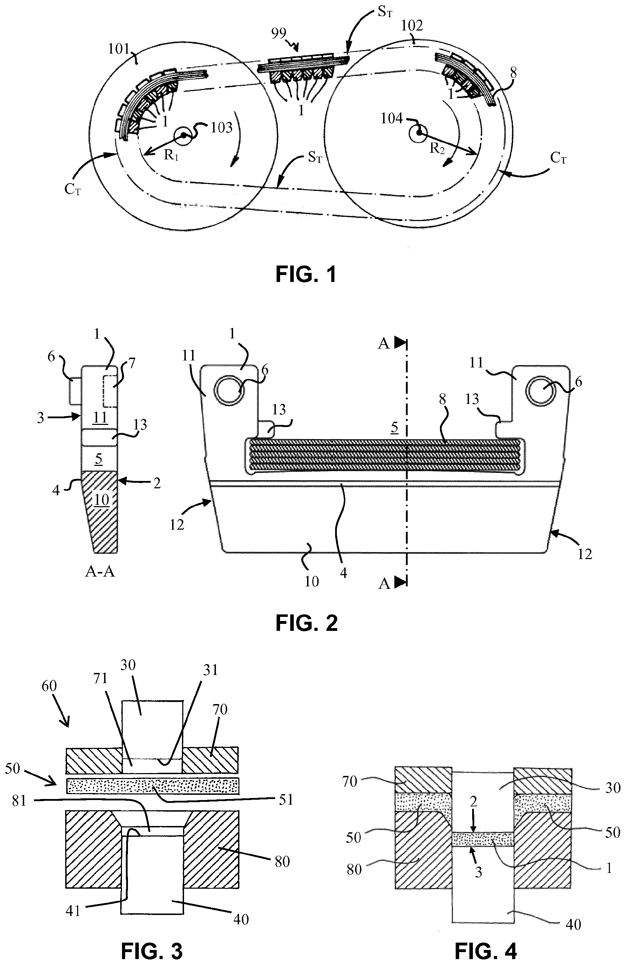

Figure 1 schematically shows, in a side elevation, the central parts of a continuously variable transmission 100 for use in a driveline of, for example, passenger motor vehicles. This transmission 100 is well-known per se and comprises at least a first variable pulley 101 and a second variable pulley 102. In the driveline, the first pulley 101 is coupled to and driven by a motor, i.e. engine and the second pulley 102 is typically coupled to driven wheels of the motor vehicle via a number of gears.

Both transmission pulleys 101, 102 comprise a first conical pulley sheave that is fixed to a pulley shaft 103, 104 of the respective pulley 101, 102 and a second conical pulley sheave that is axially displaceable relative to the respective pulley shaft 103, 104 and that is fixed thereto only in rotational direction. A drive belt 99 of the transmission is wrapped around the pulleys 101, 102, while being accommodated between the pulley sheaves thereof. As appears from figure 1, the trajectory of the drive belt 99 in the transmission 100 includes two straight sections ST and two curved sections CT where the drive belt 99 is curved around a respective one of the two transmission pulleys 101, 102.

During operation of the transmission, the drive belt 99 is pinched by and between the pulley sheaves of both pulleys 101, 102 and thus provides a rotational connection there between by means of friction. To this end, electronically controllable and typically hydraulically acting movement means working on the respective moveable pulley sheave of each pulley 101, 102 are provided in the transmission 100 (not shown). In addition to exerting a pinching force on the drive belt 99, these movement means also control respective radial positions R1 and R2 of the drive belt 99 at the pulleys 101, 102 and, hence, the speed ratio that is provided by the transmission 100 between the pulley shafts 103, 104 thereof.

The known drive belt 99 is composed of an endless carrier 8 and a plurality of transverse segments 1 that are mounted on the endless carrier 8 along the circumference thereof in an, at least essentially, contiguous row. In the drive belt 99 the transverse segments 1 are movable along the circumference of the endless carrier 8, which endless carrier 8 is typically composed of a number of flexible metal bands, i.e. tin and flat metal rings, that are stacked one around one another, i.e. that are mutually nested.

In figure 2 the known drive belt 99 is illustrated in more detail. On the right side of figure 2 the drive belt 99 is shown in a cross-section facing in the belt's circumference direction and on the left side of figure 2 a cross-section of only the transverse segment 1 is shown.

The known transverse segment 1 comprises a base portion 10 and two pillar portions 11, whereof the base portion 10 extends mainly in the axial direction of the drive belt 99 and whereof the pillar portions 11 extend mainly in the radial direction of the drive belt 99, each from a respective axial side of the base portion 10. In its thickness direction, the transverse segment 1 extends between a rear surface 2 and a front surface 3 thereof, both of which are oriented, at least generally, in the circumference direction of the drive belt 99. Between the pillar portions 11 and the base portion 10 thereof, the transverse segment defines a slot 5 for accommodating a circumference section of the endless carrier 8.

In order to prevent that the transverse segments 1 of the known drive belt 99 can separate from the endless carrier 8 thereof, in particular in a straight section ST thereof, at least one pillar portion 11 of each transverse segments 1 is provided with a hook part 13 that in axial direction extends over a part of the slot 5. Thus in the drive belt 99, the endless carrier 8 is contained in radial direction in the central slots 5 of the transverse segments 1 by the hook parts 13 thereof.

In each pillar portion 11 of the transverse segment 1, a stud 6 is provided that protrudes from the front surface 3 in, essentially, the said circumference direction. In the drive belt 99, the stud 6 is inserted in a pocket 7 provided in the opposite, i.e. rear surface 2 of an adjacent transverse segment 1 to limit a relative movement between the adjacent transverse segments 1.

On the axial sides thereof, the transverse segment 1 is provided with contact surfaces 12 for contacting (the pulley sheaves of) the transmission pulleys 101, 102. These contact surfaces 12 are mutually oriented at an angle that closely matches an angle that is present between the conical pulley sheaves of the transmission pulleys 101, 102.

The transverse segment 1 is provided with a so-called tilting zone 4 in its front surface 3. This tilting zone 4 represents an axially extending transition between a radially outer section of the transverse segment 1 of essentially constant thickness and a radially inner section thereof that is tapered in radial inward direction. Typically, the tilting zone 4 is smoothly, convexly curved. When adjacent transverse segments 1 are tilted relative to one another in the curved section CT of the drive belt 99, these (can) remain in contact at the location of the tilting zone 4.

The transverse segment 1 is typically cut out of plate- or strip-shaped basic material 50 in a blanking process by means of a blanking device 60. In figures 3 and 4, the blanking device 60 and the basic material 50 are schematically illustrated in a cross-section. In the blanking device 60 a blanking punch 30, an ejector 40, a guide plate 70 and a die 80 are applied. The guide plate 70 and the die 80 serve both to clamp the basic material 50 between them and to contain the blanking punch 30 and the ejector 40 in respective guiding spaces 71, 81 thereof. The part 51 of the basic material 50 that is located between the blanking punch 30 and the ejector 40 is destined to become the transverse segment 1. Accordingly, the blanking punch 30 and the ejector 40 have an outline that substantially corresponds to the outer contour of the transverse segment 1.

During blanking a bottom end face, i.e. working surface 31 of the blanking punch 30 and a top end face, i.e. working surface 41 of the ejector 40 are pressed against the basic material 50, at mutually opposite sides thereof, and the blanking punch 30 and the ejector 40 are moved in unison completely through the basic material 50 in the general direction from the blanking punch 30 to the ejector 40. As a result, the transverse segment 1 is cut out of the basic material 50 along the edges of the die 80, as illustrated in figure 4. Also during blanking the front surface 3 of the transverse segment 1, including the tilting zone 4 and the studs 6 thereof, is pressure shaped by the working surface 41 of the ejector 40 and the back surface 2 of the transverse segment 1, including the pockets 7 therein, is pressure shaped by the working surface 31 of the blanking punch 30. In particular for forming the pockets 7, the working surface 31 of the blanking punch 30 is provided with protrusions (not shown).

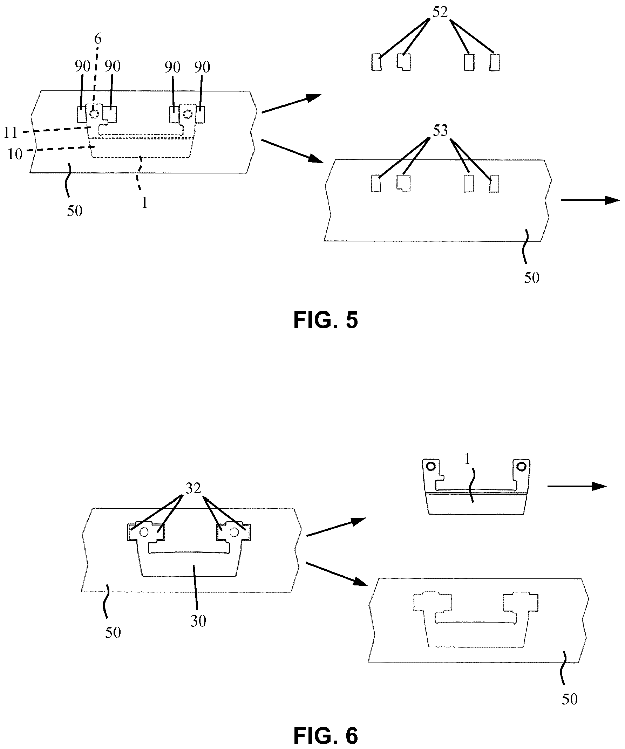

According to the present disclosure and as illustrated in figures 5 and 6, the cutting of the transverse segment 1 from basic material 50 is carried out in two steps. In a first step of such novel manufacturing method, illustrated in figure 5, four holes 53 are punched into the basic material 50 by means of four piercing punches 90, whereof a part of the circumference surfaces define at least a part of a respective one of the two side faces of the two respective pillar portions 11 of the transverse segment 1 that is still to be cut from the basic material 50 in this first step. In figure 5 the material removed 52 from the basic material 50 by the piercing punches 90 and the holes 53 thus formed are indicated by solid lines, whereas the remainder of the contour of the -still to be cut- transverse segment 1 is indicated by the dashed lines. The holes 53 are located in line with the -still to be formed- studs 6 and pockets 7 of the transverse segment 1, in particular of the pillar portions 11 thereof.

The same section of the basic material 50 is thereafter subjected to a second step of the novel manufacturing method that is illustrated in figure 6. In this second step, the remainder of the contour of the transverse segment 1 is cut out of the basic material 50, while simultaneously providing the pillar portions 11 thereof with the said studs 6 and pockets 7, basically in the conventional manner. However, in accordance with the present disclosure, the blanking punch 30 includes parts 32 that extend into the preformed holes 53 beyond the outer contour of the transverse segment 1. These latter parts 32 of the blanking punch 30 do thus not engage the basic material 50, but are instead provided to reinforce the blanking punch 30, in particular to the sides of the protrusions thereof for forming the pockets 7 in the pillar portions 11 of the transverse segment 1. Thus, at such critical location, the blanking punch 30 is wider than the pillar portions 11 of the transverse segment 1 and is thus favourably provided with an improved mechanical strength, at least compared to the conventionally shaped blanking punch 30 having a contour that corresponds to the contour of the transverse segment 1 to be cut thereby.

The present disclosure, in addition to the entirety of the preceding description and all details of the accompanying figures, also concerns and includes all of the features of the appended set of claims. Bracketed references in the claims do not limit the scope thereof, but are merely provided as non-binding examples of the respective features. The claimed features can be applied separately in a given product or a given process, as the case may be, but can also be applied simultaneously therein in any combination of two or more of such features therein.

The invention(s) represented by the present disclosure is (are) not limited to the embodiments and/or the examples that are explicitly mentioned herein, but also encompasses amendments, modifications and practical applications thereof, in particular those that lie within reach of the person skilled in the relevant art.

## Claims

1. A process for manufacturing a transverse segment (1) suitable for application in a drive belt (99) for a continuously variable transmission, which transverse segment (10) comprises a base portion (10) and a pillar portion (11), in which process the transverse segment (1) is cut from a basic material (50), **characterized in that**, the transverse segment (1) is cut in at least two process steps from the basic material (50), that in a first process step at least one hole (53) is punched into the basic material (50) whereof a part of its circumference represents a side face of the pillar part (11) and that in a second process step a part of or the entire contour of the transverse segment (1) is blanked from the basic material (50) with the aid of a blanking punch (30) that extends beyond the said contour of the transverse segment (1) into the said at least one hole (53).

2. The process for manufacturing a transverse segment (1) according to claim 1, **characterized in that**, the pillar portion (11) on a front surface (3) thereof is provided with a stud (6) and on a back surface (2) thereof is provided with a hole (7) and that the said circumference of the hole (53) represents the side face of the pillar portion (11) at the location of the stud (6) and/or the hole (7).

3. The process for manufacturing a transverse segment (1) according to claim 1 or 2, which transverse segment (1) comprises two pillar portions (11) that extend essentially in parallel from either side of the base portion (10), **characterized in that**, in the first process step in total four hole (53) are punched in the basic material, one on either side of both pillar portions (11), and **in that** parts (32) of the blanking punch (40) applied in the second process step extend into these four holes (53).
